# EUROPEAN PATENT APPLICATION

(11) **EP 3 269 971 A1**
(43) Date of publication of application: **17.01.2018**
(21) Application number: 16179303.9
(22) Date of filing: 13.07.2016
(51) Int. Cl.: F02K 1/76

(54) **HYDRAULICALLY DRIVEN THRUST REVERSER**

(71) Applicant: Goodrich Actuation Systems Limited, West Midlands B90 4SS (GB)
(72) Inventor: MORGAN, Antony, Wolverhampton, West Midlands WV4 4LF (GB)
(74) Representative: Stevens, Jason Paul

(57) **Abstract**

A drive system for a thrust reverser for a gas turbine engine comprises a plurality of mechanical actuators for driving a cowl of the thrust reverser, and a single hydraulic motor for providing power to the plurality of mechanical actuators. Power can be transmitted mechanically from the hydraulic motor to the actuators, and the hydraulic motor can be located away from fire zones in the engine.

## Description

### TECHNICAL FIELD

The present disclosure relates to a thrust reverser for an aircraft engine which is driven by a hydraulic power drive unit.

### BACKGROUND

Most modern aircraft, and in particular passenger airliners with jet engines, are provided with thrust reversers. On jet engines, these devices operate to deflect a part of the jet blast forwards, thus reducing the forward thrust generated by the engine. The thrust reversers are generally deployed after landing to help to decelerate the aircraft.

One form of conventional thrust reverser includes a number of movable cowls, and normally two movable cowls. When the cowls are actuated, a part of each cowl projects into the jet blast flowing through the engine, and part of the jet blast is deflected forward. Each cowl is actuated using a number of hydraulic cylinders (normally two or three per cowl), which are supplied with hydraulic fluid through hydraulic hoses controlled by hydraulic control valves.

However, in this conventional thrust reverser, the hydraulic cylinders, hoses and control valves are in fire zones; that is, they are in regions of the engine where a blade failure or combustion chamber failure could cause a fire. Further, a blade failure or combustion chamber failure could also damage parts of the hydraulic system, and in particular the hydraulic hoses carrying the hydraulic fluid used to actuate the hydraulic cylinders, which would lead to the fire being fed further by the hydraulic fluid. This is clearly undesirable.

Furthermore, the flow of hydraulic fluid which is required from the supply depends on the internal volumes within the hydraulic cylinders, which in turn depend on the external loads and practical implementation of the design (that is, the force necessary to move the cowls). For cascade thrust reversers (which are commonly used on turbofan engines), the requirement of actuation synchronization (that is, the requirement that both cowls are actuated at the same time to avoid asymmetric thrust reversal) mandates a minimum size for the actuation rod, which in turn also affects the hydraulic fluid flow requirements. It is expected that future thrust reverser systems will require increased loads, and it is possible that more complicated mechanical configurations will be required with an expectation of hydraulic fluid flows of similar magnitude or lower than those presently accepted.

Another form of conventional thrust reverser uses an electrical system, in which mechanical actuators for moving the cowls are driven by electric motors. The requirement for simultaneous actuation of the actuators (in order to provide simultaneous deployment of the cowls) requires a controller for the motors, and the motors which drive the actuators need a high current supply. As a result, the controllers and motors of this conventional system tend to be heavy and large, which means that there are limitations on where and how they can be arranged.

Furthermore, if the wires carrying the electric current are damaged (by chafing or other wear), this can lead to electrical discharge or arcing, which could cause fires. An additional problem is that if there is a failure of the electrical system, the system can "run away", which may lead to unwanted activation of the thrust reversers, a situation that has caused aircraft loss in the past.

### SUMMARY

There is disclosed herein a drive system for a thrust reverser for a gas turbine engine; comprising: a plurality of mechanical actuators for driving a cowl of the thrust reverser; and a hydraulic motor for providing power to the plurality of mechanical actuators.

Rotation drive from the hydraulic motor may be transmitted to the mechanical actuators by mechanical means.

The hydraulic motor may be located away from fire zones in the gas turbine engine.

The hydraulic motor may be controlled by a hydraulic motor control unit.

The drive system may include a single hydraulic motor.

There is also disclosed herein a thrust reverser for a gas turbine engine, wherein the thrust reverser contains a plurality of cowls, each cowl being driven by a drive system as described above.

All of the hydraulic motor control units of the thrust reverser may be controlled by a single controller.

There is also disclosed herein a gas turbine engine including a thrust reverser as described above.

There is also disclosed herein a method of actuating a cowl of a thrust reverser of a gas turbine engine, comprising the steps of: operating a hydraulic motor to provide power; and transmitting power from the hydraulic motor to a plurality of mechanical actuators connected to the cowl of the thrust reverser; such that the cowl is actuated when the hydraulic motor is operated.

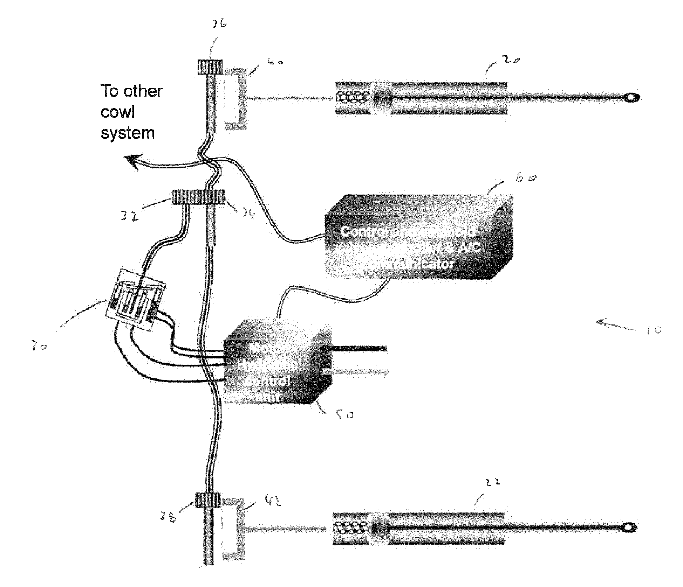

### BRIEF DESCRIPTION OF THE DRAWING

An exemplary embodiment of the present disclosure will now be described way of example only and with reference to the accompanying Figure, which shows in a highly schematic form an embodiment of a hydraulically driven thrust reverser.

### DETAILED DESCRIPTION

The Figure shows a hydraulically driven mechanism 10 for actuating a single cowl (not shown) of a thrust reverser. The cowl of the thrust reverser is moved by mechanical actuators 20, 22, rather than hydraulic cylinders. Two such actuators are shown, but the number of actuators can of course vary depending on the circumstances.

In the embodiment shown in the Figure, both actuators 20, 22 drive the same cowl. As mentioned above, thrust reversers for jet engines commonly have two cowls, and so two further actuators will be provided to drive the other cowl. The mechanism for actuating the second cowl will correspond to the mechanism as shown in the Figure.

In the embodiment shown in the Figure, the actuators 20, 22 are ball screws. However, any suitable form of mechanical actuator (such as leadscrews, ACME screws, rotary gearboxes and the like) may be used.

Both of the mechanical actuators are driven by a hydraulic motor 30, and the rotational drive from the hydraulic motor is transmitted to both actuators 20, 22. In this arrangement, there is a single hydraulic motor, but it is possible to provide a separate hydraulic motor for each actuator.

The Figure shows a specific arrangement in which the hydraulic motor drives a first gear 32, which meshes with a second gear 34. In turn, rotation of the second gear 34 is transmitted to a first pinion 36 and a second pinion 38, and these engage with first and second crown gears 40, 42. The first and second crown gears 40, 42 are connected to first and second mechanical actuators 20, 22, such that in each case rotation of the crown gear 40, 42 causes movement of the actuator 20, 22. Thus, rotation of the hydraulic motor 30 causes movement of the actuators 20, 22. Although the Figure shows an arrangement with a single rotation transmission means connecting the motor 30 to the first gear 32, and single rotation transmission means connecting the second gear 34 to the first and second pinions 36, 38, it will be appreciated that there may be multiple paths for transmitting the rotation of the motor 30 to the pinions, to provide redundancy in case of part failure.

This drive arrangement can be made lighter than a pure hydraulic arrangement as described in the introduction. Hydraulic hoses and hydraulic fluid are heavy, and replacing them with a mechanical drive allows the thrust reverser system (and thus the gas turbine engine and the aircraft) to be reduced in mass. Further, the drive arrangement shown in the Figure is simpler than a pure hydraulic arrangement, as there are fewer seals (and in particular, no high-pressure dynamic seals), and can also be easier to maintain. However, it will be appreciated by the skilled person that drive can be transmitted from the hydraulic motor 30 to the actuators 20, 22 in any suitable manner.

The hydraulic motor 30 is connected to a hydraulic motor control unit 50, which supplies hydraulic fluid to and from the hydraulic motor 30 as appropriate and thus controls the power output of the hydraulic motor 30.

Further, the hydraulic motor control unit 50 is connected to a controller 60, which sends control signals to the hydraulic motor control unit 50.

As mentioned above, a single hydraulic motor 30 is provided for both actuators 20, 22, which are connected to one of the cowls of the thrust reverser. The other cowl of the thrust reverser is also provided with two actuators (not shown), which in turn are driven by a second hydraulic motor (not shown), controlled by a second hydraulic motor control unit (not shown). Both the first hydraulic motor control unit 50 and the second hydraulic motor control unit are connected to the same controller 60, so that the cowls can be operated in synchrony with each other.

With this arrangement, the hydraulic motors 30 (and the hoses which supply hydraulic fluid) can be located some distance from the actuators 20, 22. It is thus possible to locate the hydraulic parts of the system away from any fire zones, thus improving safety, while still allowing the thrust reverser to function properly.

The thrust reverser drive system described above also provides further advantages over a pure hydraulic arrangement. Mechanical actuators can be made smaller than hydraulic cylinders of similar power, and so the provision of mechanical actuators rather than hydraulic cylinders allows greater flexibility in the positioning of the actuators. This may allow the nacelle housing the thrust reverser to be made smaller, which in turn may improve airflow in the region of the thrust reverser.

The thrust reverser drive system described above also provides advantages over an electrically driven system. The controllers in the current system are substantially smaller than the electrical controllers (by at least an order of magnitude), and so the weight of the system is reduced. In addition, there is far greater freedom in the layout of the system, as the smaller controllers can be placed in locations which simply could not accommodate the larger electrical controllers. Further, the current system can be provided with brakes to prevent unauthorized deployment in the event of a hydraulic failure.

## Claims

1. A drive system for a thrust reverser for a gas turbine engine; comprising:
a plurality of mechanical actuators for driving a cowl of the thrust reverser; and
a hydraulic motor for providing power to the plurality of mechanical actuators.

2. A drive system for a thrust reverser as claimed in claim 1, wherein rotation drive from the hydraulic motor is transmitted to the mechanical actuators by mechanical means.

3. A drive system for a thrust reverser as claimed in claim 1 or claim 2, wherein the hydraulic motor is located away from fire zones in the gas turbine engine.

4. A drive system for a thrust reverser as claimed in any preceding claim, wherein the hydraulic motor is controlled by a hydraulic motor control unit.

5. A drive system for a thrust reverser as claimed in any preceding claim, wherein there is a single hydraulic motor.

6. A thrust reverser for a gas turbine engine, wherein the thrust reverser contains a plurality of cowls, each cowl being driven by a drive system as claimed in any of claims 1 to 3.

7. A thrust reverser for a gas turbine engine, wherein the thrust reverser contains a plurality of cowls, each cowl being driven by a drive system as claimed in claim 4, wherein all of the hydraulic motor control units are controlled by a single controller.

8. A gas turbine engine including a thrust reverser as claimed in claim 6 or claim 7.

9. A method of actuating a cowl of a thrust reverser of a gas turbine engine, comprising the steps of:
operating a hydraulic motor to provide power; and
transmitting power from the hydraulic motor to a plurality of mechanical actuators connected to the cowl of the thrust reverser;
such that the cowl is actuated when the hydraulic motor is operated.
